# EUROPEAN PATENT APPLICATION

(11) **EP 4 421 209 A1**
(43) Date of publication of application: **28.08.2024**
(21) Application number: 22883215.0
(22) Date of filing: 31.08.2022
(51) Int. Cl.: C23F 11/173

(54) **METAL CORROSION PROTECTION TREATMENT METHOD FOR WATER SYSTEM**

(30) Priority: 18.10.2021 JP 2021170203
(71) Applicant: Kurita Water Industries Ltd., Tokyo 164-0001 (JP)
(72) Inventor: YOSHINO, Takanori, Tokyo 164-0001 (JP); KUMAGAI, Ayako, Tokyo 164-0001 (JP); FUJITA, Kazuhisa, Tokyo 164-0001 (JP); SATO, Kenya, Tokyo 164-0001 (JP); WATANABE, Kazuya, Tokyo 164-0001 (JP); XIA, Wei, Shanghai 200051 (CN)
(74) Representative: TBK
(86) International application number: PCT/JP2022/032714
(87) International publication number: WO 2023/067903

(57) **Abstract**

The present invention addresses the problem of providing a technique for a metal corrosion protection treatment for a water system, whereby it becomes possible to achieve a satisfactory anticorrosive effect without using a phosphorus compound, which is a causative substance for eutrophication, as a metal anticorrosive agent and it also becomes possible to achieve a satisfactory anticorrosive effect in high-hardness water as well as low-hardness water. The present invention can provide: a metal corrosion protection treatment method for a water system, in which a component (A) and a component (B) as mentioned below are allowed to be present at a usage ratio of 1:9 to 7:3 by mass in the water system; and (A) a copolymer of a (meth)acrylic acid monomer and a sulfonic acid monomer, and (B) a maleic acid-based polymer in which the carboxyl group content is 11.5 mmol/g or more.

## Description

### [Technical Field]

The present invention relates to a metal corrosion protection treatment method for a water system and the like.

### [Background Art]

In a water system such as a cooling water system, a metal member is often used for a device, a flow path, and the like. In a metal member installed in the water system, a portion that comes into contact with water is susceptible to corrosion. For example, carbon steel, copper, galvanized steel, zinc, aluminum, an aluminum alloy, stainless steel, or the like, or a heat exchanger, a reaction vessel, pipe, or the like, which is made of a copper alloy or the like, is subjected to corrosion due to contact with cooling water. In order to prevent this corrosion, a metal member installed in a water system, particularly a portion that comes into contact with water, is generally subjected to corrosion protection treatment by, for example, the addition of a chemical agent to a water system during operation.

For example, in order to suppress corrosion of a heat exchanger, a reaction vessel, or a pipe, which is made of carbon steel, at least one phosphorus compound for corrosion protection, which is selected from an orthophosphate, a hexametaphosphate, a hydroxyethylidene diphosphonate, a phosphonobutane tricarboxylate, and the like, is conventionally added to a water system such as a cooling water system. However, the use of these phosphorus compounds causes eutrophication in the water environment, and thus each country and region has a system to regulate the discharge of phosphorus outside the water system or into the natural environment. Therefore, great care and expense are required in handling phosphorus compounds and treating waste water.

As a method of effectively suppressing metal corrosion without causing such environmental problems, for example, a method of allowing (A) a copolymer of acrylic acid and sulfonic acid, (B) a copolymer of maleic acid and isobutylene, and (C) a zinc compound to be present in a cooling water system that carries out treatment of non-phosphorous and zinc (Patent Literature 1) has been proposed.

### [Citation List]

### [Patent Literature]

[Patent Literature 1]
Japanese Patent Laid-Open No. 2012-207279

### [Summary of Invention]

### [Technical Problem]

The relationship between water quality of a water system and anticorrosive effect is well known, and it has been known that a relatively satisfactory anticorrosive effect can be obtained in water where calcium carbonate easily precipitates. On the other hand, in water having low hardness, precipitation of calcium carbonate is less likely to occur, and thus the anticorrosive effect of water itself is reduced. As a problem in the related art, the following fact was found through research by the inventors of the present invention: in a case where a non-phosphorous anticorrosive agent that cannot utilize the satisfactory anticorrosive effect of phosphorus compounds is used for such water having low hardness, the anticorrosive effect on a metal member that comes into contact with water is insufficient.

Therefore, the inventors of the present invention studied a corrosion protection treatment technique that makes it possible to achieve a satisfactory anticorrosive effect not only in high-hardness water but also in low-hardness water or is good for a non-phosphorus system, where the corrosion protection treatment technique further reinforces the anticorrosive effect even in low hardness water and further, can significantly reduce the use of the phosphorus compound for corrosion protection.

A main objective of the present invention is to provide a metal corrosion protection treatment technique for a water system, which makes it possible to achieve a satisfactory anticorrosive effect even without using, as a metal anticorrosive agent, a phosphorus compound which is causative substance for eutrophication, and also makes it possible to achieve a satisfactory anticorrosive effect not only in high-hardness water but also in low-hardness water.

### [Solution to Problem]

The inventors of the present invention initially focused on a carboxyl group content in a maleic acid-based polymer. However, in a case where a carboxyl group content in a polymer contained in a chemical agent to be added to a water system was high, the polymer bound to calcium ions in the water, and insolubilized substances were likely to be formed. Actually, as shown in Example described later, in a case where a maleic acid-based polymer having a high carboxyl group content in the polymer was used alone, insolubilized substances were likely to be formed even in water having low hardness, and thus a satisfactory anticorrosive effect could not be obtained. On the other hand, the inventors of the present invention carried out intensive studies on the anticorrosive effect to be obtained by using a copolymer; however, in a case where a copolymer of a (meth)acrylic acid monomer and a sulfonic acid monomer was used alone, the anticorrosive effect was very unfavorable.

However, as a result of diligent studies, the inventors of the present invention found that in a case where a combination of two components that did not provide a satisfactory anticorrosive effect is used, that is, in a case where while a component (A) as a copolymer of a (meth)acrylic acid monomer and a sulfonic acid monomer is used in combination with a component (B) as a maleic acid-based polymer in which a carboxyl group content in the maleic acid-based polymer is equal to or larger than a predetermined content and the usage ratio of the component (A) to the component (B) by mass is set within a predetermined range, the formation of insolubilized substances in the water system can be more favorably suppressed, and further, a much satisfactory anticorrosive effect can be obtained as compared with each of the components is used alone, thereby completing the present invention. That is, the present invention is as follows.

The present invention makes it possible to provide a metal corrosion protection treatment method for a water system, in which a component (A) and a component (B) as mentioned below are allowed to be present at a usage ratio of 1:9 to 7:3 by mass in a water system.
(A) a copolymer of a (meth)acrylic acid monomer and a sulfonic acid monomer, and
(B) a maleic acid-based polymer in which a carboxyl group content in the maleic acid-based polymer is 11.5 mmol/g or more.

The present invention makes it possible to provide a metal corrosion protection treatment method, which uses (i) a metal corrosion protection treatment agent or (ii) a metal corrosion protection treatment agent kit as mentioned below, or(i) a metal corrosion protection treatment agent or (ii) a metal corrosion protection treatment agent kit.
(i) The metal corrosion protection treatment agent which contains the component (A) as a copolymer of a (meth)acrylic acid monomer and a sulfonic acid monomer and the component (B) as a maleic acid-based polymer in which a carboxyl group content in the maleic acid-based polymer is 11.5 mmol/g or more, where a content ratio of the component (A) to the component (B) by mass is 1:9 to 7:3.
(ii) The metal corrosion protection treatment agent kit which contains a first agent for metal corrosion protection containing the component (A) as a copolymer of a (meth)acrylic acid monomer and a sulfonic acid monomer and contains a second agent for metal corrosion protection containing the component (B) as a maleic acid-based polymer in which a carboxyl group content in the maleic acid-based polymer is 11.5 mmol/g or more.

The sulfonic acid monomer in the component (A) may be a monoethylenically unsaturated sulfonic acid monomer.

The weight average molecular weight of the copolymer as the component (A) may be 1,000 to 1,000,000.

The molar ratio of the (meth)acrylic acid monomer to the sulfonic acid monomer in the component (A) may be 97:3 to 30:70.

The weight average molecular weight of the maleic acid-based polymer as the component (B) may be 500 to 5,000.

The maleic acid-based polymer as the component (B) may be a copolymer of a maleic acid monomer and an isobutylene monomer, and/or a polymaleic acid.

An anticorrosive agent may be allowed to be present in the water system.

A calcium hardness of the water system may be 300 mg/L or less as CaCO₃.

### [Effects of Invention]

According to the present invention, it is possible to provide a metal corrosion protection treatment technique for a water system, which makes it possible to achieve a satisfactory anticorrosive effect even without using, as a metal anticorrosive agent, a phosphorus compound which is causative substance for eutrophication, and also makes it possible to achieve a satisfactory anticorrosive effect not only in high-hardness water but also in low-hardness water. It is noted that the effect of the present invention is not necessarily limited to the effect described herein and may be any effect described in the present specification.

### [Brief Description of Drawings]

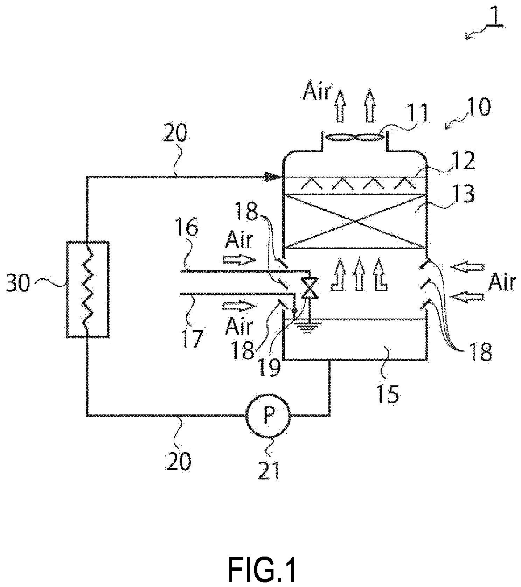

Fig. 1 is a schematic view showing an example of a water system that is used in a method according to the present embodiment, for example, an example of a circulating cooling water system having a cooling tower, and the present invention is not limited thereto.

### [Description of Embodiments]

Hereinafter, embodiments for executing the present invention will be described in detail. It is noted that the embodiment described below is an example of a representative embodiment of the present invention, and the scope of the present invention is not interpreted to be limited thereby. In addition, an upper limit value and a lower limit value regarding a numerical value can be any combination as desired.

### 1. Metal corrosion protection treatment method for water system according to present embodiment

The present invention makes it possible to provide a metal corrosion protection treatment method for a water system, in which a component (A) as a copolymer of a (meth)acrylic acid monomer and a sulfonic acid monomer and a component (B) as a maleic acid-based polymer in which a carboxyl group content in the maleic acid-based polymer is 11.5 mmol/g or more are allowed to be present in a water system at a usage ratio of 1:9 to 7:3 by mass.

In addition, it is possible to provide (i) a metal corrosion protection treatment agent or (ii) a metal corrosion protection treatment agent kit as mentioned below and to provide a metal corrosion protection treatment method for a water system, which uses (i) a metal corrosion protection treatment agent or (ii) a metal corrosion protection treatment agent kit as mentioned below.
(i) The metal corrosion protection treatment agent which contains the component (A) as a copolymer of a (meth)acrylic acid monomer and a sulfonic acid monomer and the component (B) as a maleic acid-based polymer in which a carboxyl group content in the maleic acid-based polymer is equal to or larger than a predetermined content, where a content ratio of the component (A) to the component (B) by mass is in a predetermined range.
(ii) A metal corrosion protection treatment agent kit which contains, as a constitutional chemical agent, a first agent for metal corrosion protection containing the component (A) as a copolymer of a (meth)acrylic acid monomer and a sulfonic acid monomer and a second agent for metal corrosion protection containing the component (B) as a maleic acid-based polymer in which a carboxyl group content in the maleic acid-based polymer is equal to or larger than a predetermined content, where the component (A) and the component (B) are used so that a content ratio of the component (A) to the component (B) by mass is in a predetermined range.

According to the present invention, it is possible to provide a metal corrosion protection treatment technique, for a water system, makes it possible to achieve a satisfactory anticorrosive effect even without using, as a metal anticorrosive agent, a phosphorus compound which is causative substance for eutrophication, and also makes it possible to achieve a satisfactory anticorrosive effect not only in high-hardness water but also in low-hardness water.

Hereinafter, the present embodiment will be described in detail.

In the present embodiment, a target of corrosion protection is not particularly limited; however, it is a metal material. Examples of the metal material include one or two or more selected from carbon steel, copper, galvanized steel, zinc, aluminum, an aluminum alloy, stainless steel, and the like, and alloys and the like thereof. Further, among metal materials, an iron-based material is suitable. Examples of the iron-based material include general iron materials (for example, pure iron, carbon steel, and cast iron), and more suitable examples thereof include a carbon steel material that is often used for a carbon steel pipe (for example, a STB steel pipe) for a boiler or a heat exchanger. It is noted that regarding the carbon steel material, in JIS G 0203, the range of carbon steel is such that the carbon content thereof is in a range of 0.02% by mass to about 2% by mass (more specifically 0.02% to 2.14% by mass). More specifically, among carbon steels, those having a carbon content of 0.25% by mass or less are referred to as low carbon steel, those having a carbon content of 0.25% to 0.6% by mass are referred to as medium carbon steel, those having a carbon content of 0.6% by mass or more are referred to as high carbon steel, and carbon steel having a carbon content of 0.6% by mass or less is also referred to as ordinary steel since carbon steels in a range of low carbon steel to medium carbon steel are widely used. In addition, cast iron is said to have a carbon content of more than 2% by mass. In the present embodiment, among these, ordinary steel, low carbon steel, and medium carbon steel, and more suitably low carbon steel can be allowed to achieve a satisfactory anticorrosive effect.

A target of corrosion protection treatment to which the present embodiment is suitably applied is suitably a metal material that comes into contact with water or a metal member that uses a metal material that comes into contact with water. In the present embodiment, an excellent anticorrosive effect can be obtained particularly for a carbon steel material that is in contact with water.

Examples of the place or device where a metal material or a metal member is used in the water system include various pipes and piping such as a water supply pipe, a pump, a flow path, a heat exchanger, and a refrigerator, where one or two or more selected from these may be used. More specifically, those described above or metal parts or portions included in those described above are a target of corrosion protection treatment to which the present embodiment is suitably applied.

### 1-1. Component (A) as copolymer of (meth)acrylic acid monomer and sulfonic acid monomer

A copolymer of a (meth)acrylic acid monomer and a sulfonic acid monomer (hereinafter, also referred to as a "component (A) copolymer"), which is the component (A) that is used in the present embodiment, is not particularly limited, where monomers are not limited to those described above. It may contain "another monomer" in a range where the effect of the present invention is not impaired. In addition, the component (A) copolymer may be a water-soluble salt.

It is noted that the salt that is used in the present embodiment is not particularly limited; however, a salt that can make a monomer or a polymer become a water-soluble salt is suitable. Examples of the salt include alkali metal salts such as sodium and potassium; and ammonium salts such as ammonium, where one or two or more selected from the group thereof can be used.

### <Component (A) copolymer: (meth)acrylic acid monomer>

The (meth)acrylic acid monomer is not particularly limited. However, examples thereof include (meth)acrylic acid and a salt thereof, where one or two or more selected from the group thereof can be used. In the present embodiment, the term "(meth)acrylic acid" means at least one selected from the group consisting of "acrylic acid" and "methacrylic acid." Among these, acrylic acid or a salt thereof is suitable.

### <Component (A) copolymer: sulfonic acid monomer>

The sulfonic acid monomer is not particularly limited. However, a monomer containing a sulfone group is suitable from the viewpoint of achieving a more satisfactory anticorrosive effect due to the effect of the combined use of the component (A) and the component (B), and the monomer is more preferably an unsaturated monomer.

Examples of the sulfonic acid monomer include, but are not limited to, a monoethylenically unsaturated sulfonic acid monomers and a salt thereof, among which a monoethylenically unsaturated sulfonic acid monomer is suitable.

Examples of the sulfonic acid monomer include a monomer having an amide group and a sulfone group (suitably a monomer having 6 to 9 carbon atoms), a monomer containing a hydroxy group and a sulfone group (suitably a monomer having 6 to 9 carbon atoms), a sulfonated aliphatic conjugated diene (suitably a sulfonated aliphatic conjugated diene having 4 to 15 carbon atoms), and salts thereof, where one or two or more selected from the group thereof can be used. Among these, a monomer having an amide group and a sulfone group (suitably a monomer having 6 to 9 carbon atoms) or a monomer containing a hydroxy group and a sulfone group (suitably a monomer having 6 to 9 carbon atoms) is suitable. In addition, the "sulfone group" of the monomer may be a sulfone group which may have a substituent, and examples thereof include an alkylsulfone group. The number of carbon atoms in the "alkyl" of the alkylsulfone group is suitably 1 to 8, and a methylpropanesulfone group (also referred to as tert-butylsulfone group) is more suitable. This makes it possible to achieve a more satisfactory anticorrosive effect due to the effect of the combined use of the component (A) and the component (B).

Examples of the monomer having an amide group and a sulfone group include a (meth)acrylamido-alkylpropanesulfonic acid and a crotonamido-alkylpropanesulfonic acid, and more specific examples thereof include 2-acrylamido-2-methylpropanesulfonic acid, 3-acrylamido-3,3-dimethylpropanesulfonic acid, 2-methacrylamido-2-methylpropanesulfonic acid, and 3-methacrylamido-3,3-dimethylpropanesulfonic acid, where one or two or more selected from the group thereof can be used.

Examples of the monomer containing a hydroxy group and a sulfone group include 3-allyloxy-2-hydroxypropanesulfonic acid, 3-methacryloxy-2-hydroxypropanesulfonic acid, 3-allyloxy-1-hydroxypropane-2-sulfonic acid, and 3-methacroxy-1-hydroxypropane-2-sulfonic acid, where one or two or more selected from the group thereof can be used.

Examples of the sulfonated aliphatic conjugated diene include a sulfonated 1,3-butadiene and a sulfonated 2,3-dimethyl-1,3-butadiene, where one or two or more selected from the group thereof can be used.

Examples of the more suitable sulfonic acid monomer include unsaturated monomers containing a sulfone group, such as (meth)acrylamido-methylpropanesulfonic acid, 3-allyloxy-2-hydroxypropanesulfonic acid, (meth)allylsulfonic acid, vinylsulfonic acid, styrenesulfonic acid, and 2-sulfoethyl methacrylate, and salts thereof, where one or two or more selected from the group thereof can be used. Among these, at least one monomer selected from 2-acrylamido-2-methylpropanesulfonic acid and 3-allyloxy-2-hydroxypropanesulfonic acid is suitable. This makes it possible to achieve a satisfactory anticorrosive effect due to the effect of the combined use of the component (A) and the component (B).

### <Component (A) copolymer: another monomer>

The "anther monomer" in the component (A) copolymer is not particularly limited. However, Examples thereof include an N-vinyl monomer such as N-vinylpyrrolidone, N-vinylformamide, N-vinylacetamide, N-vinyl-N-methylformamide, N-vinyl-methylacetamide, or N-vinyloxazolidone; a nitrogen-containing nonionic unsaturated monomer such as (meth)acrylamide, t-butylacrylamide, N,N-dimethylacrylamide, or N-isopropylacrylamide, and a hydroxyl group-containing unsaturated monomer such as 3-(meth)-allyloxy-1,2-dihydroxypropane, (meth)allyl alcohol, or isoprenol; a polyoxyethylene group-containing unsaturated monomer such as a compound obtained by adding about 1 to 200 moles of ethylene oxide to (meth)allyl alcohol; a (meth)acrylic acid ester such as methyl (meth)acrylate, ethyl (meth)acrylate, butyl (meth)acrylate, or hydroxyethyl (meth)acrylate; an unsaturated carboxylic acid monomer such as maleic acid or itaconic acid; and an aromatic unsaturated monomer such as styrene, where one or two or more selected from the group consisting of these monomers can be used.

### <Molar ratio (% by mole) of (meth)acrylic acid monomer to sulfonic acid monomer in component (A) copolymer>

In the component (A) as a copolymer of (meth)acrylic acid monomer and a sulfonic acid monomer, the molar ratio (% by mole) of the (meth)acrylic acid monomer to the sulfonic acid monomer is not particularly limited; however, it is preferably 99:1 to 20:80, more preferably 97:3 to 30:70, still more preferably 95:5 to 30:70, and even still more preferably 90:10 to 30:70 (suitably 40:60), and it is more preferably 90:10 to 50:50, more preferably 90:10 to 60:40, more preferably 90:10 to 70:30, and still more preferably 90:10 to 75:25. In a case where the molar ratio of the component (A) copolymer is set to the above-described molar ratio, it is possible to more favorably exhibit dispersion ability to the component (B) maleic acid-based polymer present in the water system regardless of whether the water has high hardness or low hardness.

### <Component (A) copolymer>

The component (A) copolymer that is used in the present embodiment can be manufactured according to a known manufacturing method. A suitable component (A) copolymer is a polymer obtained by copolymerizing, at a predetermined usage ratio by mass, (i) a (meth)acrylic acid monomer and (ii) a sulfonic acid monomer selected from a monomer having an amide group and a sulfone group, a monomer containing a hydroxy group and a sulfone group, and the like.

A more suitable component (A) copolymer is a polymer obtained by copolymerizing, at a predetermined usage ratio by mass, (i) an acrylic acid monomer and (ii) at least one sulfonic acid monomer selected from 2-acrylamido-2-methylpropanesulfonic acid and 3-allyloxy-2-hydroxypropanesulfonic acid.

A still more suitable component (A) copolymer is one or two or more selected from the group consisting of a copolymer of an acrylic acid monomer and a 2-acrylamido-2-methylpropanesulfonic acid monomer, a copolymer of an acrylic acid monomer and a 3-allyloxy-2-hydroxypropanesulfonic acid monomer, and the like. In this case, a predetermined molar ratio of a more suitable (meth)acrylic acid monomer to the sulfonic acid monomer is 97:3 to 70:30, and the molar ratio (% by mole) in the component (A) copolymer described above can be appropriately employed as the molar ratio. This makes it possible to achieve a more satisfactory anticorrosive effect and a more satisfactory anti-gelation ability, to the water having a low hardness concentration even in a case where a phosphorus compound is not used as a metal anticorrosive agent.

### <Weight average molecular weight of component (A) copolymer>

The weight average molecular weight of the copolymer of the (meth)acrylic acid monomer and the sulfonic acid monomer according to the GPC method is not particularly limited; however, it is preferably 1,000 to 1,000,000, more preferably 3, 000 to 1,000,000, still more preferably 3,000 to 80,000, and even still more preferably 5,000 or more and 50,000 (suitably 30,000) or less. A weight average molecular weight of a polymer can be measured according to <GPC analysis of weight average molecular weight of polymer> (in terms of polyacrylic acid). In a case where adjustment is carried out to such a weight average molecular weight, it is possible to achieve a more satisfactory anticorrosive effect due to the effect of the combined use of the component (A) and the component (B).

### 1-2. Component (B) maleic acid-based polymer

In the component (B) maleic acid-based polymer that is used in the present invention, it is suitable that the carboxyl group content in the polymer is equal to or larger than a predetermined content from the viewpoint of achieving a more satisfactory anticorrosive effect due to the effect of the combined use of the component (A) and the component (B). The predetermined content is suitably equal to or larger than a predetermined content, for example, 11.5 mmol/g or more.

The component (B) maleic acid-based polymer that is used in the present embodiment is suitably a polymer containing maleic acid as a main constitutional unit, and the component (B) maleic acid-based polymer may be any one of a homopolymer or a copolymer. Examples of the homopolymer include a polymaleic acid consisting of maleic acid, which is polymerized with a maleic acid-based monomer. In addition, although the copolymer is not particularly limited, examples thereof include copolymers of a maleic acid-based monomer and another monomer that is copolymerizable with the maleic acid-based monomer. The component (B) maleic acid-based polymer may be a water-soluble salt, and the salt described in "1-1." described above can be appropriately employed as the salt.

The component (B) maleic acid-based polymer is not particularly limited and may be any polymer that is obtained according to an organic solvent-based polymerization method or an aqueous polymerization method, where the polymerization method can be carried out by appropriately employing a known technique and a commercially available product may be used. A method that is capable of carrying out polymerization so that the carboxyl group content in the polymer reaches a level equal to or higher than a predetermined content, for example, 11.5 mmol/g or more can be appropriately employed. In addition, at the time of polymerization, a monomer that is copolymerizable with a maleic acid-based monomer (suitably, a maleic acid monomer) may be contained in addition to the maleic acid-based monomer.

### <Component (B) maleic acid-based polymer: maleic acid-based monomer>

The maleic acid-based monomer is not particularly limited. However, examples thereof include a maleic acid monomer such as maleic anhydride, maleic acid, or a maleate, and a maleic acid ester, where one or two or more selected from the group consisting of these monomers can be used.

Among the maleic acid-based monomers, maleic acid monomers are preferable, and further, among these, a maleic anhydride-based monomer is preferable, and a maleic anhydride is more preferable. In a case of aqueous polymerization, a hydrolyzate (maleic acid) of maleic anhydride may also be used as a monomer, and thus the maleic anhydride-based monomer includes maleic anhydride and a hydrolyzate of maleic anhydride. This makes it possible to achieve a more satisfactory anticorrosive effect due to the effect of the combined use of the component (A) and the component (B).

Examples of the maleate include mono- or dialkali metal salts such as a lithium salt, a sodium salt, and a potassium salt, alkaline earth metal salts such as a calcium salt and a magnesium salt, and ammonium salts such as an ammonium salt and a diammonium salt, where one or two or more selected from the group consisting of these monomers can be used.

Examples of the maleic acid ester include an esterified product between maleic acid and a saturated hydrocarbon alcohol such as methanol or ethanol, an unsaturated hydrocarbon alcohol such as allyl alcohol or methallyl alcohol, or a polyalkylene glycol derivative such as a polyalkylene glycol, a polyoxyalkylene monomethyl ether, or a polyoxyalkylene monoallyl ether, where one or two or more selected from the group consisting of these monomers can be used.

### <Component (B) maleic acid-based polymer: copolymerizable monomer>

The copolymerizable monomer (hereinafter, also referred to as "the copolymerizable monomer of the component (B)") in the component (B) maleic acid-based polymer is not particularly limited. However, examples thereof include an N-vinyl monomer such as N-vinylpyrrolidone, N-vinylformamide, N-vinylacetamide, N-vinyl-N-methylformamide, N-vinyl-methylacetamide, or N-vinyloxazolidone; a nitrogen-containing nonionic unsaturated monomer such as (meth)acrylamide, t-butylacrylamide, N,N-dimethylacrylamide, or N-isopropylacrylamide; a hydroxyl group-containing unsaturated monomer such as 3-(meth)-allyloxy-1,2-dihydroxypropane, (meth)allyl alcohol, or isoprenol; a polyoxyethylene group-containing unsaturated monomer such as a compound obtained by adding about 1 to 200 moles of ethylene oxide to (meth)allyl alcohol; a (meth)acrylic acid ester such as methyl (meth)acrylate, ethyl (meth)acrylate, butyl (meth)acrylate, or hydroxyethyl (meth)acrylate; an unsaturated carboxylic acid monomer such as (meth)acrylic acid or itaconic acid; an aromatic unsaturated monomer such as styrene; and an unsaturated hydrocarbon such as isoprenol, where one or one more selected from the group consisting of these monomers can be used.

Among the copolymerizable monomer of the component (B), an unsaturated hydrocarbon monomer (suitably an ethylenically unsaturated hydrocarbon monomer) is preferable, where the unsaturated hydrocarbon monomer may be either chain-like or cyclic. In addition, it is preferably a monoethylenically unsaturated hydrocarbon monomer, where those having 4 to 6 carbon atoms are suitable. It is preferably a chain-like monoethylenically unsaturated hydrocarbon monomer among the copolymerizable monomers of the component (B), and further, it is more preferably an isobutylene monomer among the chain-like monoethylenically unsaturated hydrocarbon monomers. This makes it possible to achieve a more satisfactory anticorrosive effect due to the effect of the combined use of the component (A) and the component (B).

Examples of the monoethylenically unsaturated hydrocarbon having 4 to 6 carbon atoms among the copolymerizable monomers of the component (B) include chain-like monoethylenically unsaturated hydrocarbons such as isobutene, 1-butene, 2-butene, 1-pentene, 2-pentene, methylbutene, methylpentene, and hexene; and cyclic monoethylenically unsaturated hydrocarbons such as cyclopentene, methylcyclopentene, and cyclohexene, where one or two or more selected from the group consisting of these monomers can be used. This makes it possible to achieve a satisfactory anticorrosive effect due to the effect of the combined use of the component (A) and the component (B).

### <Component (B) maleic acid-based polymer>

A suitable component (B) maleic acid-based polymer is suitably a copolymer of a maleic acid monomer and a monoethylenically unsaturated hydrocarbon monomer (suitably an isobutylene monomer), and/or a polymaleic acid (suitably a homopolymer of a maleic acid monomer). This makes it possible to achieve a more satisfactory anticorrosive effect due to the effect of the combined use of the component (A) and the component (B).

### <Carboxyl group content in component (B) maleic acid-based polymer>

The carboxyl group content in the component (B) maleic acid-based polymer is the total content of carboxyl groups in the polymer, regardless of the homopolymer or copolymer and regardless of the monomer origin. The carboxyl group content in the polymer is, as a suitable lower limit value, preferably 11.5 mmol/g or more, more preferably 11.7 mmol/g or more, still more preferably 12 mmol/g or more, even still more preferably 12.5 mmol or more, and even further still more preferably 13 mmol/g or more. In addition, a suitable upper limit value thereof is not particularly limited, and it is theoretically 17.2 mmol/g and can be set within a range in which manufacturing is allowed. For example, it can be set to 17, 16, or 15 mmol/g or less, or the like. The carboxyl group content in the component (B) maleic acid-based polymer can be determined according to can be determined according to <Test 1: Titration analysis of carboxyl group content in maleic acid-based polymers (samples 1 to 5)> in [Examples] below.

In the present embodiment, even in a case where the carboxyl group content in the component (B) maleic acid-based polymer is increased to a level equal to or higher than a predetermined content, it is possible to more favorably suppress the gelation of the component (B) in the water system and it is also more favorably disperse the component (B) by using the component (A) copolymer in combination. As a result, it is possible to more favorably achieve the anticorrosive effect improved by increasing the carboxyl group content in the polymer as the component (B).

### <Weight average molecular weight of component (B) maleic acid-based polymer>

The weight average molecular weight of the component (B) maleic acid-based polymer determined according to the GPC method is not particularly limited. However, the suitable lower limit value thereof is preferably 250 or more, more preferably 500 or more, and the suitable upper limit value thereof is preferably 10,000 or less, more preferably 8,000 or less, still more preferably 5,000 or less, and even still more preferably 3,000 or less. The suitable numerical value range thereof is preferably 500 to 5,000, and more preferably 500 to 3,000. A weight average molecular weight of a polymer can be measured according to <GPC analysis of weight average molecular weight of polymer> (in terms of polyacrylic acid). In a case where adjustment is carried out to such a weight average molecular weight, it is possible to achieve a more satisfactory anticorrosive effect due to the effect of the combined use of the component (A) and the component (B).

### 1-3. Combined use of component (A) copolymer and component (B) maleic acid-based polymer

The component (A) copolymer and the component (B) maleic acid-based polymer, which are used in the present embodiment can be combined by appropriately employing the component (A) copolymer described in "1-1." described above and the component (B) maleic acid-based polymer described in "1-2." described above.

### <Usage ratio of (A) copolymer to component (B) maleic acid-based polymer by mass>

The usage ratio of the component (A) copolymer to the component (B) maleic acid-based polymer by mass, which are used in the present invention, is not particularly limited; however, it is suitable that they are allowed to be present at a ratio of 1:9 to 7:3 in the water system. The usage ratio is more preferably 2:8 to 7:3, still more preferably 3:7 to 7:3, even still more preferably 3:7 to 6:4, and even further still more preferably 3:7 to 5.5:4.5. Such a usage ratio by mass (content ratio by mass) makes it possible to more favorably suppress the gelation that occurs in the water system due to the component (B) maleic acid-based polymer, and the effect of the combined use of the component (A) and the component (B) makes it possible to achieve a more satisfactory anticorrosive effect. It is noted that the usage ratio by mass is the component (A) copolymer (mg solid/L): the component (B) maleic acid-based polymer (mg solid/L).

### <Use of component (A) copolymer for water system>

The amount of the component (A) copolymer to be added to the water system (mg solid/L, hereinafter denoted as "mg/L") is not particularly limited. However, the suitable lower limit value thereof is preferably 0.1 mg/L or more, more preferably 0.5 mg/L or more, still more preferably 1 mg/L or more, even more preferably 2 mg/L or more, even still more preferably 3 mg/L or more, and even further still more preferably 4 mg/L or more. In addition, the suitable upper limit value thereof is not particularly limited. However, from the viewpoint of reducing the amount of the chemical agent to be used and achieving an anticorrosive effect, it is preferably 100 mg/L or less, more preferably 50 mg/L or less, still more preferably 30 mg/L or less, even more preferably 20 or 15 mg/L or less, and even still more preferably 7 or 6 mg/L or less, and the preferred numerical value range thereof is preferably 3 to 15 mg/L. It is possible to more satisfactorily achieve the effect of the combined use of the component (B) maleic acid-based polymer by allowing the above-described suitable amount of the component (A) copolymer to be present in the water system.

### <Use of component (B) maleic acid-based polymer for water system>

The amount of the component (B) maleic acid-based polymer to be added to the water system (mg solid/L, hereinafter denoted as "mg/L") is not particularly limited. However, the suitable lower limit value thereof is preferably 0.1 mg/L or more, more preferably 0.5 mg/L or more, still more preferably 1 mg/L or more, even more preferably 2 mg/L or more, even still more preferably 3 mg/L or more, and even further still more preferably 4 mg/L or more. In addition, the suitable upper limit value thereof is not particularly limited. However, from the viewpoint of reducing the amount of the chemical agent to used and achieving an anticorrosive effect, it is preferably 100 mg/L or less, more preferably 50 mg/L or less, still more preferably 30 mg/L or less, even more preferably 20 or 15 mg/L or less, and even still more preferably 7 or 6 mg/L or less, and the preferred numerical value range thereof is preferably 3 to 15 mg/L. It is possible to more satisfactorily achieve the effect of the combined use of the component (A) copolymer by allowing the above-described suitable amount of the component (B) maleic acid-based polymer to be present in the water system.

### <Suitable aspect in combined use of (A) copolymer and component (B) maleic acid-based polymer>

In the combined use of the component (A) copolymer and the component (B) maleic acid-based polymer according to the present embodiment, the suitable aspect is the component (A) as a copolymer of (meth)acrylic acid monomer and a monoethylenically unsaturated sulfonic acid monomer, and the component (B) maleic acid-based polymer from the viewpoint of achieving a satisfactory anticorrosive effect due to the effect of the combined use of the component (A) and the component (B).

From the viewpoint of achieving a satisfactory anticorrosive effect due to the effect of the combined use of the component (A) and the component (B), examples of the more suitable aspect of the combination of the component (A) copolymer and the component (B) maleic acid-based polymer include (i) for the component (A), a copolymer of an acrylic acid monomer and a monomer having an amide group and an alkylsulfone group, or a copolymer of an acrylic acid monomer and a monomer having a hydroxy group and an alkylsulfone group; and (ii) for the component (B), a copolymer of a maleic acid monomer and a monoethylenically unsaturated hydrocarbon monomer or a homopolymer of a maleic acid monomer.

Examples of the more suitable aspect of the component (A) include a copolymer of an acrylic acid monomer and a (meth)acrylamido-alkylpropanesulfonic acid monomer, a copolymer of an acrylic acid monomer and an allyloxyhydroxypropanesulfonic acid monomer, and a polymer of an acrylic acid monomer and a methacryloxyhydroxypropanesulfonic acid monomer. Among these, a copolymer of an acrylic acid monomer and 2-acrylamido-2-methylpropanesulfonic acid, and/or a copolymer of an acrylic acid monomer and 3-allyloxy-2-hydroxypropanesulfonic acid is more preferable. This makes it possible to achieve a more satisfactory anticorrosive effect due to the effect of the combined use of the component (A) and the component (B).

Examples of the more suitable aspect of the component (B) include a maleic acid monomer (suitably maleic anhydride) and a chain-like monoethylenically unsaturated hydrocarbon monomer having 4 to 6 carbon atoms (suitably isobutylene), or a polymaleic acid (suitably a polymer consisting of maleic anhydride). The effect of the combined use of the component (A) and the component (B) makes it possible to achieve a more satisfactory anticorrosive effect.

### <Optional component>

In the present embodiment, in addition to the component (A) and component (B), an optional component may be used in the water system or contained in the chemical agent, as appropriate, within a range where the effect of the present invention is not impaired. The optional component is not particularly limited; however, one or two or more selected from the group consisting of, for example, a pH adjusting agent, an anti-foaming agent, an anticorrosive agent, a scale inhibitor, a bactericide, and an algicide, may be used.

In the present embodiment, it is suitable that in addition to the combined use of the component (A) copolymer and the component (B) maleic acid-based polymer, which are described above, further, a scale inhibitor as a component other than the component (A) copolymer and the component (B) maleic acid-based polymer is allowed to be present in the water system. Examples of the scale inhibitor include phosphonic acid and a salt thereof, phosphotartaric acid and a salt thereof, an acrylic acid-based polymer and a salt thereof, a maleic acid-based polymer and a salt thereof, and a polyaspartic acid and a salt thereof, where one or two more selected from these compounds can be used.

In addition, In the present embodiment, it is suitable that in addition to the combined use of the component (A) copolymer and the component (B) maleic acid-based polymer, which are described above, further, a slime control agent as a component other than the component (A) copolymer and the component (B) maleic acid-based polymer is allowed to be present in the water system. The slime control agent is not particularly limited. However, examples thereof include hypochlorous acid and a salt thereof, chlorine gas, hypobromous acid and a salt thereof, stabilized chlorine, stabilized bromine, and an organic bactericide, where one or two more selected from these substances can be used.

### <Anticorrosive agent>

In the present embodiment, it is suitable that in addition to the combined use of the component (A) copolymer and the component (B) maleic acid-based polymer, which are described above, further, a component (C) anticorrosive agent other than the combination of the component (A) and the component (B) (more suitably a metal compound for corrosion protection) is allowed to be present in the water systems. It is noted that the metal compound for corrosion protection refers to a metal compound that is used for corrosion protection, where the metal compound is a metal compound that enables easy release of heavy metal ions into water, and the metal compound for corrosion protection is not particularly limited as long as it can achieve this effect.

The component (C) anticorrosive agent is not particularly limited. However, examples thereof include a metal compound for corrosion protection such as a zinc salt, a tin salt, a manganate, aluminum, or an aluminate, an organic acid compound, an acrylic acid polymer and a salt thereof, a polyaspartic acid and a salt thereof, a polyitaconic acid and a salt thereof, an amine compound, and an amino acid compound, and one or two or more selected from the group consisting of these substances can be used by being used in combination with the component (A) copolymer and the component (B) maleic acid-based polymer. Among these, metal compounds for corrosion protection are suitable, and among these metal compounds for corrosion protection, a zinc salt and/or a tin salt is preferable, and a zinc salt is still more preferable.

The amount of the component (C) anticorrosive agent added to the water system (mg solid/L, hereinafter denoted as "mg/L") is not particularly limited. However, a suitable lower limit value thereof is preferably 0.1 mg/L or more and more preferably 0.5 mg/L or more. In addition, the suitable upper limit value thereof is preferably 5 mg/L or more, more preferably 4 mg/L or less, still more preferably 3 mg/L or less, and even still more preferably 2 mg/L or less. It is possible to more satisfactorily achieve an anticorrosive effect equal to or higher than the effect of the combined use of the component (A) copolymer and the component (B) maleic acid-based polymer by allowing a suitable amount of the component (C) anticorrosive agent to be present in the water system. As a result, in a case where an anticorrosive effect equivalent to those of the component (A) and the component (B) is intended to be obtained, it is also possible to further reduce the adding amount of each of the component (A) and the component (B) by adding the component (C).

### <Phosphorus compound>

In the present embodiment, by at least using the above-described component (A) copolymer and component (B) maleic acid-based polymer in combination for the water system, it is possible to achieve a satisfactory anticorrosive effect even without using a phosphorus compound as an anticorrosive agent even in the case of the low-hardness water. The amount of the phosphorus compound to be added to the water system is not particularly limited. However, from the viewpoint of reducing eutrophication, it is preferably 0.5 mg/L or less as P, more preferably 0.3 mg/L or less as P, and still more preferably 0.1 mg/L or less as P, and it is more suitable that the phosphorus compound is substantially not used or substantially not contained. Regarding the phrase "substantially not used or substantially not contained", 0.05 mg/L or less as P is suitable, 0.01 mg/L or less as P is more suitable, and no addition of the phosphorus compound to the water system still more suitable.

It is noted that the phosphorus concentration can be determined using the molybdenum blue (ascorbic acid reduction) method (JIS K 0102 46.1.1).

### 1-4. Metal corrosion protection treatment method for water system

In a metal corrosion protection treatment method for a water system according to the present embodiment, the component (A) copolymer and the component (B) maleic acid-based polymer, which are described above, are suitably allowed to be present in a water system at a predetermined usage ratio by mass or content ratio by mass, and more suitably allowed to be present at a ratio of 1:9 to 7:3.

In the present embodiment, the component (A) copolymer and the component (B) maleic acid-based polymer can be added to a water system as a one-liquid type chemical agent or a multi-liquid type chemical agent.

In addition, it is sufficient to add the component (A) copolymer and the component (B) maleic acid-based polymer to the water system so that both the components can at least be mixed, where each addition may be made at the same time or at a different time and may be either continuous or intermittent.

In the present embodiment, as a more suitable aspect, it is possible to provide a metal corrosion protection treatment method for a water system, which uses (i) a metal corrosion protection treatment agent or (ii) a metal corrosion protection treatment agent kit as mentioned below.
(i) The metal corrosion protection treatment agent which contains (A) a copolymer of a (meth)acrylic acid monomer and a sulfonic acid monomer and (B) a maleic acid-based polymer in which a carboxyl group content in the maleic acid-based polymer is 11.5 mmol/g or more, where a content ratio of (A) to (B) by mass is 1:9 to 7:3.
(ii) The metal corrosion protection treatment agent kit which contains a first agent for metal corrosion protection containing (A) a copolymer of a (meth)acrylic acid monomer and a sulfonic acid monomer and contains a second agent for metal corrosion protection containing (B) a maleic acid-based polymer in which a carboxyl group content in the maleic acid-based polymer is 11.5 mmol/g or more.

The water system to which the present embodiment is applied is not particularly limited, and examples thereof include a cooling water system, an RO water system, a paper pulp process water system, and a scrubber water system.

The present embodiment has an excellent feature that it can be applied to a wide range of water from high hardness to low hardness. In the present embodiment, the anticorrosive effect is sufficiently achieved in a case of water that is generally used in a cooling water system.

In addition, in the present embodiment, the anticorrosive effect is sufficiently achieved even without using a phosphorus compound as a metal anticorrosive agent, and thus the present embodiment can be also applied to the waste water standards for phosphorus concentration in each country. For example, the phosphorus concentration described in the amount of the phosphorus compound to be added can be appropriately employed. For example, the phosphorus concentration may be preferably 0.5 mg/L or less as P, more preferably 0.1 mg/L or less as P as a water condition of the water system.

Calcium hardness is not particularly limited as a water condition of the water system, and the anticorrosive effect can be obtained in the present embodiment not only for high hardness but also for low hardness, where the suitable upper limit value thereof is not particularly limited. However, it is 1,000 mg/L or less as CaCO₃, preferably 500 mg/L or less as CaCO₃, and more preferably 300 mg/L or less as CaCO₃. In addition, the present embodiment can be applied even in a case of low hardness, and in the case of low hardness, a suitable lower limit value thereof is preferably 1 mg/L or more as CaCO₃, more preferably 5 mg/L or more as CaCO₃, still more preferably 10 mg/L or more as CaCO₃, even still more preferably 25 mg/L or more as CaCO₃, and even further still more preferably 50, 75, or 100 mg/L or more as CaCO₃, and a suitable numerical value range thereof is preferably 25 to 300 mg/L as CaCO₃. Calcium hardness can be determined according to the JIS K0101 industrial water test method.

M alkalinity (acid consumption (pH 4.8)) is not particularly limited as a water condition of the water system, and it is preferably 10 to 1,000 mg/L as CaCO₃, more preferably 25 to 500 mg/L or more as CaCO₃, and still more preferably 100 to 300 mg/L as CaCO₃. Acid consumption (PH: 4.8) can be determined according to the JIS K0101 industrial water test method.

Magnesium hardness is not particularly limited as a water condition of the water system, and it is preferably 500 mg/L or less, more preferably 300 mg/L or less, still more preferably 200 mg/L or less, and even still more preferably 100 mg/L or less. Magnesium hardness can be determined according to JIS K0101 industrial water test method.

In addition, the silica concentration is not particularly limited as a water condition of the water system, and it is preferably 5 to 250 mg/L, more preferably 10 to 150 mg/L, and still more preferably 15 to 100 m/L. The silica concentration can be determined according to JIS K0101 Industrial Water Test Method.

In addition, the chloride ion concentration is not particularly limited as a water condition of the water system, and it is preferably 5 to 500 mg/L, more preferably 50 to 300 mg/L, and still more preferably 50 to 200 m/L. The chloride ion concentration can be determined according to JIS K0101 Industrial Water Test Method.

In addition, the sulfate ion concentration is not particularly limited as a water condition of the water system, and it is preferably 500 mg/L or less, more preferably 300 mg/L or less, and still more preferably 200 mg/L or less. The sulfate ion concentration can be determined according to JIS K0101 Industrial Water Test Method.

The preferred pH of the water condition of the water system is preferably 6 to 11, more preferably 6.5 to 10, and still more preferably 7 to 9. In addition, the water temperature of the water system is not particularly limited; however, it is preferably 0°C to 100°C, more preferably 5°C to 80°C, and still more preferably 10°C to 60°C.

The suitable aspect according to the present embodiment is suitably applied to a water system in which metal materials that are easily corroded by water are used in various places (for example, a heat exchanger and a pipe) and is more suitably applied to a cooling water system, and further, it can be suitably applied to a circulating cooling water system. According to the present embodiment, the anticorrosive effect due to the metal corrosion protection treatment method according to the present invention is sufficiently achieved.

The method according to the present embodiment can also be realized by a control unit that includes a CPU and the like in a device (for example, a computer, a PLC, a server, a cloud service, or the like) for managing the metal corrosion protection treatment described above or the cooling water system or the like which will be described later. In addition, the method according to the present embodiment can be stored as a program in a hardware resource including a recording medium (a nonvolatile memory (a USB memory or the like), a HDD, a CD, a DVD, a Blu-ray disc, or the like) and can also be realized by the control unit. The recording medium is suitably a computer-readable recording medium. It is also possible to provide a device including a metal corrosion protection treatment system or the like which carries out control to add a chemical agent to a water system with the control unit, the control unit, or the system. In addition, the management device is equipped with at least a CPU as a constitutional element of a computer, and examples thereof include an input unit such as a keyboard, a communication unit such as a network, a display unit such as a display, a storage unit such as an HDD, a ROM, and a RAM, among which one or two or more can be selected. Among these, it is suitable to include a RAM, a storage unit, a display unit, and an input unit, and the selected constitutional elements are connected, for example, by a bus as a data transmission path.

### <Cooling water system>

The cooling water system in the present embodiment refers to a system through which cooling water that is used for operating a heat exchanger and the like is allowed to pass, in air conditioning equipment of a building, a local facility, or the like, a plant, and the like.

The cooling water system may be any of a single-pass type, an open circulation type, or a closed circulation type.

In the present embodiment, an excellent anticorrosive effect can be achieved in a circulating cooling water system.

The circulating cooling water system is not particularly limited, and it is suitably a water system that includes, in the system, a cooling tower that is installed in, for example, air conditioning equipment, a petrochemical complex, or a general factory. The circulating cooling water system is suitably configured to indirectly cool a heat source that is generated in this air conditioning equipment, general factory, or the like, and it may be a general water system that is configured to include a heat exchanger, a circulating water channel, and a cooling tower.

The type of circulating cooling water system is not particularly limited; however, the circulating cooling water system may be any one of an open circulation cooling water system or a closed circulating cooling water system. It is suitable that the open circulation cooling water system has such a configuration that allows cooling water to circulate in an open type, and it is suitable that the closed circulating cooling water system has such a configuration that allows cooling water to circulate in a close type.

In addition, a metal corrosion protection treatment method for a cooling water system according to the present embodiment (more specifically, a metal corrosion protection treatment method for a metal member in the cooling water system) suitably has at least a step of adding the component (A) copolymer and the component (B) maleic acid-based polymer into the cooling water system to bring them into contact with a metal member. It is noted that in this case, the component (A) and the component (B) may be added in a form of a metal corrosion protection treatment agent that is a one-liquid type chemical agent, or they may be added in a form of a metal corrosion protection treatment agent kit that is a multi-liquid type chemical agent. Further, it is more suitable to further add the above-described metal compound for corrosion protection to the cooling water system at the same time as or a time different from the time of the addition of the component (A) and/or the component (B).

In addition, the place where the chemical is added is not particularly limited and may be any place in the cooling water system. Examples thereof include a blowing means, a water sprinkling means, a pit, a make-up water supply means, a chemical agent injection means, a circulating water channel, a transfer pump, and a heat exchanger, where a make-up water supply means, a chemical agent injection means, a circulating water channel, a transfer pump, or the like is suitable, and the addition can be carried out in one or two more places selected from these places.

As described above, according to the metal corrosion protection treatment method according to the present embodiment, the synergistic effect of both the component (A) and the component (B) makes it possible to impart an excellent anticorrosive effect to a metal member.

A metal corrosion protection treatment method for an open circulation cooling water system 1, which is an example according to the present embodiment, will be described with reference to Fig. 1; however, the present embodiment is not limited thereto.

In the open circulation cooling water system 1, water containing the component (A) copolymer and the component (B) maleic acid-based polymer is transferred from a pit 15 to a heat exchanger 30 by a transfer pump 21 via a circulating water channel 20 and then is returned to an open cooling tower 10 through the circulating water channel 20 via the heat exchanger 30. In the cooling tower 10, the water containing the component (A) and the component (B) passes through a water sprinkling means 12 and a filler region 13, is stored in the pit 15, and is transferred again to the circulating water channel 20 again by the pump 21. Even during this circulation, since the component (A) and the component (B) are allowed to be present together, the component (B) favorably maintains a dispersed state without undergoing gelation, which makes it possible for the cooling water system to continuously maintain the anticorrosive effect. Through this circulation, the component (A) and the component (B), which are present in the water in the water system, can come into contact with a metal member, and it is possible to achieve an anticorrosive effect on the metal member.

The component (A) and the component (B) are transferred to the pit 15 by one or a plurality of chemical agent injection means 17 at the same time or at different times. Both the components may be mixed in the pipe during this transfer, or both the components may be mixed in the pit 15. In addition, one or a plurality of the chemical agent injection means 17 may be provided. For example, a plurality of separate chemical agent injection means may be provided for each of the component (A) and the component (B), or one or a plurality of chemical agent injection means may be provided for adding a one-liquid type chemical agent containing both the components, to the water system. In addition, these chemical agent injection means may be used, or a separate chemical agent injection means may be provided, in a case of adding the component (C) anticorrosive agent (suitably a metal compound for corrosion protection). In response to the water shortage due to transpiration or the like, water is supplied to the pit 15 by a make-up water supply means 16 as necessary, and a flow path for supplying this make-up water to the pit 15 may be configured to be capable of adding one or a plurality of chemical agents from the chemical agent injection means 17. It is noted that the air for cooling is discharged from a blowing means 11, from a looper 18 through the filler region 13 and the water sprinkling means 12, by being discharged as outside air by the blowing means 11.

### 2. Metal corrosion protection treatment agent and metal corrosion protection treatment agent kit according to present embodiment

Regarding the description of the metal corrosion protection treatment agent and the metal corrosion protection treatment agent kit according to the present embodiment, the descriptions for the component (A), the component (B), each adding amount, each usage ratio by mass, each configuration, each method, each term, and the like, which overlap with the descriptions in "1. Metal corrosion protection treatment method for water system according to present embodiment" described above, will be omitted as appropriate. However, the descriptions in "1." described above also apply to the metal corrosion protection treatment agent and the metal corrosion protection treatment agent kit according to the present embodiment and thus can be appropriately employed. The usage ratio by mass and the like in "1." described above can also be read as the content ratio by mass and the like.

The chemical agent according to the present embodiment can be provided as any of a one-liquid type chemical agent or a multi-liquid type chemical agent.

The chemical agent according to the present embodiment makes it possible to provide, as a metal corrosion protection treatment agent, (i) a metal corrosion protection treatment agent which contains the component (A) as a copolymer of a (meth)acrylic acid monomer and a sulfonic acid monomer and the component (B) as a maleic acid-based polymer in which a carboxyl group content in the maleic acid-based polymer is 11.5 mmol/g or more, where a content ratio of the component (A) to the component (B) by mass is more suitably 1:9 to 7:3 in the metal corrosion protection treatment agent.

The chemical agent according to the present embodiment makes it possible to provide, as a metal corrosion protection treatment agent kit, a metal corrosion protection treatment agent kit which contains, as a constitutional chemical agent, a first agent for metal corrosion protection containing the component (A) as a copolymer of a (meth)acrylic acid monomer and a sulfonic acid monomer and a second agent for metal corrosion protection which contains the component (B) as a maleic acid-based polymer in which the carboxyl group content in the maleic acid-based polymer is 11.5 mmol/g or more, where a usage ratio of the component (A) to the component (B) by mass is more suitably 1:9 to 7:3. In the kit, the component (A) and the component (B) may be in a state of being contained in separate containers. In addition, an optional component such as the component (C) anticorrosive agent or the phosphorus compound may be contained, as a constitutional chemical agent of a third agent, in the metal corrosion protection treatment kit in a state being contained in a separate container, or it may be blended with the first chemical agent and/or the second chemical agent as a mixed component of the first chemical agent and/or the second chemical agent.

It is suitable that the sulfonic acid monomer in the component (A) is a monoethylenically unsaturated sulfonic acid monomer. It is suitable that a weight average molecular weight of the copolymer as the component (A) is 1,000 to 1,000,000. It is suitable that a molar ratio of the (meth)acrylic acid monomer to the sulfonic acid monomer in the component (A) is 97:3 to 30:70.

It is suitable that a weight average molecular weight of the maleic acid-based polymer as the component (B) is 500 to 5,000. It is suitable that the maleic acid-based polymer as the component (B) is a copolymer of a maleic acid monomer and an isobutylene monomer, and/or a polymaleic acid.

It is suitable that the metal corrosion protection treatment agent further contains an anticorrosive agent (suitably a metal compound for corrosion protection), or it is suitable that the metal corrosion protection treatment agent kit contains a third agent for metal corrosion protection containing an anticorrosive agent (suitably a metal compound for anticorrosion).

The metal corrosion protection treatment agent or the metal corrosion protection treatment agent kit can be used as appropriate depending on the water conditions of the water system, and it is suitably used, for example, for a chemical agent for use in a case where the calcium hardness of the water system is 300 mg/L or less as CaCO₃ or at such calcium hardness.

In the present embodiment, the component (A) copolymer and the component (B) maleic acid-based polymer can exhibit a metal anticorrosive action. As a result, the component (A) copolymer and the component (B) maleic acid-based polymer can be contained as an effective component of the metal corrosion protection treatment agent or the like or can be used for the metal corrosion protection treatment agent or the like. It is noted that the agent may be a composition.

In addition, the component (A) copolymer and the component (B) maleic acid-based polymer can be used to produce a metal corrosion protection treatment agent and the like.

In addition, the present embodiment makes it possible to provide the component (A) copolymer and the component (B) maleic acid-based polymer for carrying out a metal corrosion protection treatment or for use in a metal corrosion protection treatment, or use thereof.

The present embodiment also makes it possible to provide a metal corrosion protection treatment method that uses the component (A) copolymer and the component (B) maleic acid-based polymer, or a metal corrosion protection treatment method that uses a one-liquid type chemical agent or a multi-liquid type chemical agent, which containing these components.

The present technique can also employ the following configurations.
[1] A metal corrosion protection treatment method for a water system,
   wherein a component (A) and a component (B) as mentioned below are allowed to be present at a usage ratio of 1:9 to 7:3 by mass in the water system;
   (A) a copolymer of a (meth)acrylic acid monomer and a sulfonic acid monomer, and
   (B) a maleic acid-based polymer in which a carboxyl group content in the maleic acid-based polymer is 11.5 mmol/g or more.
[2] The metal corrosion protection treatment method for a water system according to [1], wherein the sulfonic acid monomer in the component (A) is a monoethylenically unsaturated sulfonic acid monomer.
[3] The metal corrosion protection treatment method for a water system according to [1] or [2], wherein a weight average molecular weight of the copolymer as the component (A) is 1,000 to 1,000,000.
[4] The metal corrosion protection treatment method for a water system according to any one of [1] to [3], wherein a molar ratio of the (meth)acrylic acid monomer to the sulfonic acid monomer in the component (A) is 97:3 to 30:70.
[5] The metal corrosion protection treatment method for a water system according to any one of [1] to [4], wherein a weight average molecular weight of the maleic acid-based polymer as the component (B) is 500 to 5,000.
[6] The metal corrosion protection treatment method for a water system according to any one of [1] to [5], wherein the maleic acid-based polymer as the component (B) is a copolymer of a maleic acid monomer and an isobutylene monomer, and/or a polymaleic acid.
[7] The metal corrosion protection treatment method for a water system according to any one of [1] to [6], wherein an anticorrosive agent (suitably a metal compound for corrosion protection) is further allowed to be present in the water system.
[8] The metal corrosion protection treatment method for a water system according to any one of [1] to [7], wherein a calcium hardness of the water system is 300 mg/L or less as CaCO₃.
[9] (i) A metal corrosion protection treatment agent or (ii) a metal corrosion protection treatment agent kit as mentioned below, or a metal corrosion protection treatment method for a water system, which uses (i) a metal corrosion protection treatment agent or (ii) a metal corrosion protection treatment agent kit as mentioned below, or the metal corrosion protection treatment method for a water system according to any one of [1] to [8],
   (i) a metal corrosion protection treatment agent which contains (A) a copolymer of a (meth)acrylic acid monomer and a sulfonic acid monomer and (B) a maleic acid-based polymer in which a carboxyl group content in the maleic acid-based polymer is 11.5 mmol/g or more, where a mass content ratio of (A) to (B) is 1:9 to 7:3, or
   (ii) a metal corrosion protection treatment agent kit which contains a first agent for metal corrosion protection containing (A) a copolymer of a (meth)acrylic acid monomer and a sulfonic acid monomer and contains a second agent for metal corrosion protection containing (B) a maleic acid-based polymer in which a carboxyl group content in the maleic acid-based polymer is 11.5 mmol/g or more.
[10] A component (A) as a copolymer of a (meth)acrylic acid monomer and a sulfonic acid monomer and a component (B) as a maleic acid-based polymer in which a carboxyl group content in the maleic acid-based polymer is 11.5 mmol/g or more, the component (A) and the component (B) being for producing a metal corrosion protection treatment agent, or use thereof.
[11] A component (A) as a copolymer of a (meth)acrylic acid monomer and a sulfonic acid monomer and a component (B) as a maleic acid-based polymer in which a carboxyl group content in the maleic acid-based polymer is 11.5 mmol/g or more, the component (A) and the component (B) being for use in a metal corrosion protection treatment agent or for a metal corrosion protection treatment agent, or use thereof.
[12] A first agent for metal corrosion protection containing the component (A) as a copolymer of a (meth)acrylic acid monomer and a sulfonic acid monomer and a second agent for metal corrosion protection containing the component (B) as a maleic acid-based polymer in which the carboxyl group content is 11.5 mmol/g or more, the first agent and the second agent being for producing a metal corrosion protection treatment agent kit, or use thereof.
[13] A component (A) as a copolymer of (meth)acrylic acid monomer and sulfonic acid monomer, the component (A) being for producing a first agent for metal corrosion protection of a metal corrosion protection treatment agent kit, or use thereof; and
   a component (B) as a maleic acid-based polymer in which a carboxyl group content in the maleic acid-based polymer is 11.5 mmol/g or more, the component (B) being for producing a second agent for metal corrosion protection of a metal corrosion protection treatment agent kit, or use thereof.
[14] A first agent for metal corrosion protection containing the component (A) as a copolymer of a (meth)acrylic acid monomer and a sulfonic acid monomer and A second agent for metal corrosion protection containing the component (B) as a maleic acid-based polymer in which the carboxyl group content is 11.5 mmol/g or more, the first agent and the second agent being for use in a metal corrosion protection treatment agent kit or for a metal corrosion protection treatment agent kit, or use thereof.
[15] A component (A) as a copolymer of (meth)acrylic acid monomer and sulfonic acid monomer, the component (A) being for use in a first agent for metal corrosion protection of a metal corrosion protection treatment agent kit or for the first agent for metal corrosion protection, or use thereof: and
   a component (B) as a maleic acid-based polymer in which a carboxyl group content in the maleic acid-based polymer is 11.5 mmol/g or more, the component (B) being for use in a second agent for metal corrosion protection of a metal corrosion protection treatment agent kit or for the second agent for metal corrosion protection, or use thereof.

### [Examples]

The embodiments of the present invention will be described with reference to the following Examples and Comparative Examples. It is noted that the scope of the present invention is not limited to the following Examples.

### <Test 1: Titration analysis of carboxyl group content in maleic acid-based polymers (samples 1 to 5)>

### <Method>

Titrando (Metorom) was used for titration analysis. 1 g of a maleic acid-based polymer was dissolved in 20 mL of pure water, the pH was lowered to 2 or less using hydrochloric acid, the solution was set in Titrando and subjected to titration using 0.5 mol/LNaOH. The amount of NaOH required to neutralize the maleic acid-based polymer was calculated from the difference between the amount of NaOH dropwise added up to a neutralization point of hydrochloric acid and the amount of NaOH dropwise added up to a neutralization point of the maleic acid-based polymer, and the carboxyl group content in the maleic acid-based polymer was calculated from the amount of NaOH required to neutralize the maleic acid-based polymer. The calculation expression is as follows.

Carboxyl group content in maleic acid-based polymer (mmol/g) = (amount of aqueous NaOH solution (0.5 mol/L) required for neutralization of maleic acid-based polymer (mL)/0.5 (mol/L))/used maleic acid-based polymer (1 g)

Commercially available products used as samples 1 to 5 are as follows: the sample 1: ISOBAM KPS-3 (maleic anhydride: manufactured by KURARAY Co., Ltd.), the sample 2: Belclene 288 (manufactured by Italmatch Chemicals S.p.A), the sample 3: Belclene 272 (manufactured by Italmatch Chemicals S.p.A), the sample 4: Crest Guard 559 (manufactured by CREST Water Pte Ltd); and the sample 5: HPMA-S, manufactured by Changzhou Dongna Chemical Co., Ltd. The samples are such that the samples 1 to 3 and 5 are obtained from polymerization using an organic solvent system, and the sample 4 is obtained from polymerization using a water system. In addition, maleic anhydride is generally used as a raw material of a maleic acid-based polymer, and for example, maleic anhydride is used as a raw material of the sample 1.

**[Table 1]**

| Table 1 Sample of maleic acid-based polymer | | | | |
|---|---|---|---|---|
| | Sample | Composition | Weight average molecular weight | Carboxyl group content (mmol/g) |
| Comparative Example 1-1 | Sample 1 | Maleic acid / isobutylene | 19000 | 6.9 |
| Comparative Example 1-2 | Sample 2 | Maleic acid / alkyl acrylate / vinyl acetate | 1800 | 10.5 |
| Comparative Example 1-3 | Sample 3 | Maleic acid / isobutylene | 1000 | 11.4 |
| Example 1-1 | Sample 4 | Maleic acid / isobutylene | 1000 | 13.4 |
| Example 1-2 | Sample 5 | Maleic acid | 800 | 12.7 |

### <Result>

Table 1 shows the maleic acid-based polymers (the samples 1 to 5) subjected to titration analysis and the carboxyl group contents thereof. The fact that carboxyl group content is high as compared with other maleic acid-based polymers is common to the samples 4 and 5. From the sample 3 and the sample 4, a maleic acid-based polymer in which a carboxyl group content in the maleic acid-based polymer is 11.5 mmol/g or more was set as a maleic acid-based polymer in which the carboxyl group content in the maleic acid-based polymer is equal to or larger than a predetermined content.

### <GPC analysis of weight average molecular weight of polymer>

The weight average molecular weight of each polymer can be measured according to gel permeation chromatography (GPC), and it is a value calculated in terms of standard polyacrylic acid according to the GPC method.

### <Test 2>

### <Method>

A corrosion test was carried out to check the effect of the combined use of the copolymer consisting of (meth)acrylic acid and a sulfonic acid and the maleic acid-based polymer. A copolymer (weight average molecular weight: 19,000, having a molar ratio of 80 (AA):20 (AMPS-1), hereinafter also referred to as "AA/AMPS-1") of acrylic acid and acrylamido-methylpropanesulfonic acid (2-acrylamido-2-methylpropanesulfonic acid) was used as a copolymer (first chemical agent) obtained from a (meth)acrylic acid monomer and a sulfonic acid monomer, and the polymer of the sample 4 in Table 1 was used as a maleic acid-based polymer (second chemical agent). The anticorrosive effect was evaluated in a case where the mass blending ratio of two kinds of polymers, AA/AMPS-1 and the sample 4, had been changed. As shown in Table 2, each test water (Comparative Examples 2-1 to 2-4, and Examples 2-1 to 2-7) is prepared by adding the first chemical agent and the second chemical agent to raw water so that the concentrations of the added first chemical agent and second chemical agent were as shown in Table 2. The operating conditions for evaluating the anticorrosive effect are a water temperature of 30°C, a test period of 3 days, and a rotation speed of 150 rpm. The water conditions of the used raw water are calcium hardness: 100 mg/L as CaCO₃, acid consumption (pH 4.8): 100 mg/L as CaCO₃, magnesium hardness: 50 mg/L, silica: 20 mg/L, chloride ion concentration: 100 mg/L, and sulfate ion concentration: 100 mg/L, and pH 8.2. The material used in the test is a test piece (30 mm × 50 mm × 1 mm) made of SPCC. It is noted that the used test piece made of SPCC has a carbon content of 0.02% to 0.15% by mass and is classified as low carbon steel.

One test piece was immersed in 1 L of test water in a 2 L beaker and stirred with a stirrer under the above-described operating conditions. The test results were evaluated by determining the corrosion weight loss from the difference in the weight of the test piece before and after the test and calculating the corrosion rate (mdd) based on the following expression. Corrosion rate (mdd) = corrosion weight loss (mg) / surface area of test piece (dm2) / test period (day)

### <Result>

Table 2 shows the measurement results of the corrosion rate. In a case where the blending ratio (in terms of mass ratio) of AA/AMPS-1 to the sample 4, which is a maleic acid-based polymer and has a carboxyl group content in 11.5 mmol/g or more, was in a range of 7:3 to 1:9, an excellent anticorrosive effect was obtained, and in particular, an excellent anticorrosive effect was obtained in a range of 7:3 to 3:7. It is considered that under conditions in which a ratio of AA/AMPS-1 added is high and a ratio of the sample 4 added is low, corrosion has occurred due to the poor anticorrosive effect of AA/AMPS-1. In addition, it is considered that under conditions in which a ratio of AA/AMPS-1 added is low and a ratio of the sample 4 added is high, the anticorrosive effect has reduced since the sample 4 has been deactivated due to gelation.

**[Table 2]**

| Table 2 Corrosion rate in case of combined use of AA/AMPS and sample 4 (test 2) | | |
|---|---|---|
| | Addition concentration (mg/L) AA/AMPS-1 : sample 4 | Corrosion rate (mdd) |
| Comparative Example 2-1 | 10:0 | 63.3 |
| Comparative Example 2-2 | 9:1 | 45.2 |
| Comparative Example 2-3 | 8:2 | 22.1 |
| Example 2-1 | 7:3 | 9.8 |
| Example 2-2 | 6:4 | 7.0 |
| Example 2-3 | 5:5 | 3.6 |
| Example 2-4 | 4:6 | 5.0 |
| Example 2-5 | 3:7 | 8.0 |
| Example 2-6 | 2:8 | 10.2 |
| Example 2-7 | 1:9 | 12.0 |
| Comparative Example 2-4 | 0:10 | 13.2 |

### <Test 3>

### <Method>

In order to evaluate the ease of gelation of the maleic acid-based polymer, the samples 1 to 4 in Table 1 and for comparison, AA/AMPS-1 and a copolymer (having a molar ratio of 82 (AA): 18 (HAPS-1), weight average molecular weight: 11,000, hereinafter also referred to as AA/HAPS-1) of acrylic acid and 3-allyloxy-2-hydroxypropanesulfonic acid were subjected to an evaluation test for anti-gelation ability.

Ultrapure water, each polymer solution, and a calcium hardness solution were added to a 500 mL screw cap bottle while stirring each time. The calcium hardness solution was added so that the concentration thereof was a predetermined concentration, each polymer solution was added so that the concentration thereof was 100 mg/L in the test water, and the ultrapure water was added so that the total volume was 500 mL. A test liquid was adjusted with NaOH, H₂SO₄, or the like so that the pH thereof was 8.5, and the cap of the screw cap bottle was closed and allowed to stand at 90°C for 1 hour. After 1 hour, turbidity was measured using a spectrophotometer at λ=380 nm and a 50 mm cell. At the same time, absorbance was also measured under a condition without adding a calcium hardness since the coloration of the polymer may affect the absorbance. This absorbance was subtracted from each value. It is indicated that the smaller the correction value of the absorbance is, the less gelation occurs, which is favorable.

### <Result>

Table 3 shows the test conditions and the measurement results of the absorbance. In each of the maleic acid-based polymers of the samples 1 to 4, the turbidity of the test liquid was confirmed at each specific calcium hardness, and thus it was found that gelation has occurred. However, it was found that the calcium concentration (calcium hardness) at which gelation occurs varies depending on the kind of polymer. In a case where a comparison is made among the carboxyl group contents in the polymers listed in Table 1, it was found that the larger the carboxyl group content in the polymer is, at the lower calcium concentration in the test liquid gelation occurs. On the other hand, it was confirmed that AA/AMPS-1 and AA/HAPS-1 are not gelated even in a case where the calcium hardness is 1,000 mg/L as CaCO₃.

The above results show that a high content of carboxyl groups in the polymer promotes the gelation of the test liquid. It was considered that in a case where a maleic acid-based polymer having a high carboxyl group content in the polymer is used, the anticorrosive effect may be reduced due to the ease of gelation of the maleic acid-based polymer. On the other hand, a copolymer of (meth)acrylic acid and sulfonic acid was considered to maintain a dispersed state without gelating the test liquid due to the sulfone group thereof.

**[Table 3]**

| Table 3 Gelation of maleic acid-based polymer | | | | |
|---|---|---|---|---|
| Evaluated polymer | Calcium hardness (mg/L as CaCO₃) | Absorbance (-logT) | | Visual observation |
| | | Analysis value | Correction value*¹ | |
| Sample 1 | 0 | 0.002 | - | Transparent |
| | 25 | 0.002 | 0.000 | Transparent |
| | 50 | 0.002 | 0.000 | Transparent |
| | 75 | 0.002 | 0.000 | Transparent |
| | 100 | 0.006 | 0.004 | Transparent |
| | 200 | 0.105 | 0.103 | Turbid |
| Sample 2 | 0 | 0.002 | - | Transparent |
| | 25 | 0.002 | 0.000 | Transparent |
| | 50 | 0.007 | 0.005 | Transparent |
| | 75 | 0.034 | 0.032 | Turbid |
| | 100 | 0.128 | 0.128 | Turbid |
| Sample 3 | 0 | 0.011 | - | Transparent |
| | 25 | 0.016 | 0.005 | Transparent |
| | 50 | 0.030 | 0.019 | Turbid |
| | 75 | 0.065 | 0.054 | Turbid |
| | 100 | 0.158 | 0.147 | Turbid |
| Sample 4 | 0 | 0.019 | - | Transparent |
| | 25 | 0.035 | 0.016 | Turbid |
| | 50 | 0.061 | 0.042 | Turbid |
| | 75 | 0.107 | 0.088 | Turbid |
| | 100 | 0.224 | 0.205 | Turbid |
| AA/AMPS-1 | 0 | 0.001 | - | Transparent |
| | 500 | 0.001 | 0.000 | Transparent |
| | 1000 | 0.004 | 0.003 | Transparent |
| AA/HAPS-1 | 0 | 0.000 | - | Transparent |
| | 500 | 0.000 | 0.000 | Transparent |
| | 1000 | 0.004 | 0.004 | Transparent |

### <Test 4>

### <Method>

An evaluation test for anti-gelation ability was carried out to check whether the dispersion ability of the copolymer consisting of (meth)acrylic acid and sulfonic acid could give an effect of suppressing the gelation of the maleic acid-based polymers. AA/AMPS-1 (having a molar ratio of 80:20) was used as a copolymer consisting of (meth)acrylic acid and sulfonic acid, and the sample 4 was used as a maleic acid-based polymer.

Ultrapure water, each polymer solution, and a calcium hardness solution were added to a 500 mL screw cap bottle while stirring each time, and the total volume was adjusted to 500 mL. Each polymer solution and the calcium hardness solution were added so that the concentrations thereof were respectively predetermined concentrations, and ultrapure water was added so that the total volume was 500 mL. An adjustment was carried out with NaOH, H₂SO₄, or the like so that the pH was 8.5, and the cap of the screw cap bottle was closed and allowed to stand at 90°C for 1 hour. After 1 hour, turbidity was measured using a spectrophotometer at λ=380 nm and a 50 mm cell. At the same time, absorbance was also measured under a condition without adding a calcium hardness since the coloration of the polymer may affect the absorbance. This absorbance was subtracted from each value. It is indicated that the smaller the correction value of the absorbance is, the less gelation occurs, which is favorable.

### <Result>

Table 4 shows the test conditions and the measurement results of the absorbance. Gelation occurred in cases of the condition 3 and the condition 4, in which only the sample 4 was added as a maleic acid-based polymer in which a carboxyl group content in the polymer is 11.5 mmol/g or more. In contrast, in a case where AA/AMPS-1 and the sample 4 were used in combination, no gelation occurred. From this fact, it was shown that in a case where a maleic acid-based polymer having a high carboxyl group content in the polymer is used in combination with an AA/AMPS-1 polymer, it is possible to suppress the gelation due to calcium ions in water and the maleic acid-based polymer having a high carboxyl group content in the polymer.

In addition, Example 4-1 and Example 4-2 with a calcium hardness of 0 mg/L as CaCO₃ were transparent without turbidity even after being left for several days, and thus it was shown that the copolymer consisting of (meth)acrylic acid and sulfonic acid, and the maleic acid-based polymer having a high carboxyl group content in the polymer can be applied to both the one-liquid type chemical agent and the multi-liquid type chemical agent (chemical agent kit).

**[Table 4]**

| Table 4 Effect of suppressing gelation due to combined use of AA/AMPS polymer and maleic acid-based polymer | | | | | |
|---|---|---|---|---|---|
| | Adding condition for polymer | Calcium hardness (mg/L as CaCO₃) | Absorbance (-logT) | | |
| | | | Analysis value | Correction value*¹ | Visual observation |
| Example 4-1 | Condition 1 | 0 | 0.002 | - | Transparent |
| | AA/AMPS : sample 4 = 4:4 (mg solid/L) | 150 | 0.002 | 0.000 | Transparent |
| | | 300 | 0.002 | 0.000 | Transparent |
| Example 4-2 | Condition 2 | 0 | 0.002 | - | Transparent |
| | AA/AMPS : sample 4 = 8:8 (mg solid/L) | 150 | 0.003 | 0.001 | Transparent |
| | | 300 | 0.003 | 0.001 | Transparent |
| Comparative Example 4-1 | Condition 3 | 0 | 0.002 | - | Transparent |
| | AA/AMPS : sample 4 = 0:8 (mg solid/L) | 150 | 0.016 | 0.014 | Turbid |
| | | 300 | 0.020 | 0.018 | Turbid |
| Comparative Example 4-2 | Condition 4 | 0 | 0.003 | - | Transparent |
| | AA/AMPS : sample 4 = 0:16 (mg solid/L) | 150 | 0.047 | 0.044 | Turbid |
| | | 300 | 0.065 | 0.062 | Turbid |

| | | | | | |
|---|---|---|---|---|---|
| *¹⁾ Values obtained by subtracting an absorbance value under conditions without adding a calcium hardness | | | | | |

### <Test 5>

### <Method>

A corrosion test was carried out to check the characteristics of the optimal maleic acid-based polymer in the effect of the combined use of the copolymer of (meth)acrylic acid and sulfonic acid and the maleic acid-based polymer. AA/AMPS-1 in the test 2 was used as a copolymer (first chemical agent) of a (meth)acrylic acid monomer and a sulfonic acid monomer, and the polymer of each of the samples 1 to 5 in Table 1 was used as a maleic acid-based polymer (second chemical agent). The operating conditions for evaluating the anticorrosive effect are a water temperature of 30°C, a test period of 3 days, and a rotation speed of 150 rpm. The water conditions of the used raw water are calcium hardness: 100 mg/L as CaCO₃, acid consumption (pH 4.8): 100 mg/L as CaCO₃, magnesium hardness: 50 mg/L, silica: 20 mg/L, chloride ion concentration: 150 mg/L, sulfate ion concentration: 150 mg/L, pH 8.2, AA/AMPS-1: 6 mg/L, and maleic acid-based polymer: 6 mg/L. The material used in the test is a test piece (30 mm × 50 mm × 1 mm) made of SPCC. One test piece was immersed in 1 L of test water and stirred with a stirrer under the above-described operating conditions. The test results were evaluated by determining the corrosion weight loss from the difference in the weight of the test piece before and after the test and calculating the corrosion rate (mdd) based on the following expression. Corrosion rate (mdd) = corrosion weight loss (mg) / surface area of test piece (dm2) / test period (day)

### <Result>

Table 5 shows the concentrations of the chemical agents used in the corrosion test and the measurement results of the corrosion rate. In a case where the sample 4 and the sample 5 were used as a maleic acid-based polymer having a high carboxyl group content, a satisfactory anticorrosive effect was confirmed. Due to the fact that the carboxyl group content in the polymers of the sample 4 and the sample 5 is highest as compared with the carboxyl group contents in Table 1, it was considered that the maleic acid-based polymer in which a carboxyl group content in the maleic acid-based polymer is 11.5 mmol/g or more contributes to the satisfactory anticorrosive effect.

**[Table 5]**

| Table 5 Relationship between kind of maleic acid-based polymer and anticorrosive effect | | | | | |
|---|---|---|---|---|---|
| | Additive -1 | | Additive -2 | | Corrosion rate (mdd) |
| | Kind | Concentration (mg solid/L) | Kind | Concentration (mg solid /L) | |
| Comparative Example 5-1 | AA/AMPS-1 | 6 | Sample 1 | 6 | 181.6 |
| Comparative Example 5-2 | | | Sample 2 | 6 | 156.5 |
| Comparative Example 5-3 | | | Sample 3 | 6 | 104.7 |
| Example 5-1 | | | Sample 4 | 6 | 24.3 |
| Example 5-2 | | | Sample 5 | 6 | 14.0 |

### <Test 6>

### <Method>

A corrosion test was carried out to check the characteristics of the optimal maleic acid-based polymer under the conditions in which zinc was used in combination, in the effect of the combined use of the copolymer of (meth)acrylic acid and sulfonic acid and the maleic acid-based polymer. AA/AMPS-1 in the test 2 was used as a copolymer (first chemical agent) of a (meth)acrylic acid monomer and a sulfonic acid monomer, and the polymer of each of the samples 1 to 5 in Table 1 was used as a maleic acid-based polymer (second chemical agent). The operating conditions for evaluating the anticorrosive effect are a water temperature of 30°C, a test period of 3 days, and a rotation speed of 150 rpm. The water conditions of the used raw water are calcium hardness: 100 mg/L as CaCO₃, acid consumption (pH 4.8): 100 mg/L as CaCO₃, magnesium hardness: 50 mg/L, silica: 20 mg/L, chloride ion concentration: 400 mg/L, sulfate ion concentration: 400 mg/L, pH 8.2, AA/AMPS-1: 6 mg/L, maleic acid-based polymer: 6 mg/L, and zinc chloride: 1.5 mg/L as Zn. The material used in the test is a test piece (30 mm × 50 mm × 1 mm) made of SPCC. One test piece was immersed in 1 L of test water and stirred with a stirrer under the above-described operating conditions. The test results were evaluated by determining the corrosion weight loss from the difference in the weight of the test piece before and after the test and calculating the corrosion rate (mdd) based on the following expression. Corrosion rate (mdd) = corrosion weight loss (mg) / surface area of test piece (dm2) / test period (day)

### <Result>

Table 6 shows the concentrations of the chemical agents used in the corrosion test and the measurement results of the corrosion rate. Even under the conditions in which zinc was used in combination, a satisfactory anticorrosive effect was confirmed in a case where the sample 4 and the sample 5 were used as a maleic acid-based polymer. It was found that a satisfactory effect can be obtained even in case where the maleic acid-based polymer, in which a carboxyl group content in the maleic acid-based polymer is 11.5 mmol/g or more, is used in combination with zinc.

**[Table 6]**

| Table 6 Relationship between kind of maleic acid-based polymer and anticorrosive effect | | | | | | | |
|---|---|---|---|---|---|---|---|
| | Additive -1 | | Additive -2 | | Additive -3 | | Corrosion rate mdd) |
| | Kind | Concentration (mg solid /L) | Kind | Concentration (mg solid /L) | Kind | Concentration (mg solid /L) | |
| Comparative Example 6-1 | AA/AMPS-1 | 6 | Sample 1 | 6 | Zinc | 1.5 | 218.5 |
| Comparative Example 6-2 | | | Sample 2 | 6 | | | 29.2 |
| Comparative Example 6-3 | | | Sample 3 | 6 | | | 15.1 |
| Example 6-1 | | | Sample 4 | 6 | | | 4.1 |
| Example 6-2 | | | Sample 5 | 6 | | | 5.2 |

### <Test 7>

### <Method>

A corrosion test was carried out to check the effect of the combined use of the copolymer of (meth)acrylic acid and a sulfonic acid and the maleic acid-based polymer in the high-hardness water. In addition to the above-described two kinds of copolymers, zinc chloride or tin (II) chloride as a metal compound for corrosion protection was used in combination to carry out a test. AA/AMPS-1 or a copolymer (weight average molecular weight: 6,000, molar ratio 89: 11, hereinafter also referred to as AA/AMPS-2) of an acrylic acid monomers and an acrylamido-methylpropanesulfonic acid monomer was used as a copolymer (first chemical agent) of a (meth)acrylic acid monomer and a sulfonic acid monomer, and the polymer of each of the sample 1 and sample 4 in Table 1 was used as a maleic acid-based polymer (second chemical agent). The operating conditions for evaluating the anticorrosive effect are a water temperature of 30°C, a test period of 3 days, and a rotation speed of 150 rpm. The water conditions of the used raw water are calcium hardness: 500 mg/L as CaCO₃, acid consumption (pH 4.8): 200 mg/L as CaCO₃, magnesium hardness: 250 mg/L, silica: 20 mg/L, chloride ion concentration: 500 mg/L, sulfate ion concentration: 500 mg/L, and pH: 8.6. The material used in the test is a test piece (30 mm × 50 mm × 1 mm) made of SPCC. One test piece was immersed in 1 L of test water and stirred with a stirrer under the above-described operating conditions. The test results were evaluated by determining the corrosion weight loss from the difference in the weight of the test piece before and after the test and calculating the corrosion rate (mdd) based on the following expression. Corrosion rate (mdd) = corrosion weight loss (mg) / surface area of test piece (dm2) / test period (day)

### <Result>

Table 7 shows the concentrations of the chemical agents used in the corrosion test and the measurement results of the corrosion rate. As shown in Japanese Patent Laid-Open No. 2012-207279 (Patent Literature 1), the combination of AA/AMPS-2, the sample 1, and zinc also achieves a satisfactory effect in the high-hardness water; however, similarly, a satisfactory effect is also achieved even in a case where the polymer of the sample 4 rather than the polymer of the sample 1 is used. From this fact, it can be seen that the maleic acid-based polymer in which a carboxyl group content in the maleic acid-based polymer is 11.5 mmol/g or more is applicable. In addition, under the conditions in which tin was used in combination as a metal compound for corrosion protection, a satisfactory anticorrosive effect was obtained only in a case where the polymer of sample 4 was used. From this fact, it can be seen that the maleic acid-based polymer in which a carboxyl group content in the maleic acid-based polymer is 11.5 mmol/g or more may be used in combination with an anticorrosive agent for a metal (tin or the like) other than zinc.

**[Table 7]**

| Table 7 Relationship between kind of maleic acid-based polymer and anticorrosive effect | | | | | | | |
|---|---|---|---|---|---|---|---|
| | Additive -1 | | Additive -2 | | Additive -3 | | Corrosion rate (mdd) |
| | Kind | Concentration (mg solid /L) | Kind | Concentration (mg solid /L) | Kind | Concentration (mg solid /L) | |
| Comparative Example 7-1 | AA/AMPS-2 | 6 | Sample 1 | 6 | Zinc | 2 | 4.9 |
| Example 7-1 | | | Sample 4 | 6 | | | 3.0 |
| Comparative Example 7-2 | AA/AMPS-1 | 12 | Sample 1 | 12 | Tin (II) | 1 | 90.7 |
| Example 7-2 | | | Sample 4 | 12 | | | 13.9 |

### [Reference Signs List]

1 Open circulation cooling water system
10 Open cooling tower
11 Blowing means
12 Water sprinkling means
13 Filler region
14 Space
15 Pit
16 Make-up water supply means
17 Chemical agent injection means
18 Looper
20 Circulating water channel
21 Transfer pump
30 Heat exchanger

## Claims

1. A metal corrosion protection treatment method for a water system,
wherein a component (A) and a component (B) as recited below are allowed to be present at a usage ratio of 1:9 to 7:3 by mass in the water system;
(A) a copolymer of a (meth)acrylic acid monomer and a sulfonic acid monomer, and
(B) a maleic acid-based polymer in which a carboxyl group content in the maleic acid-based polymer is 11.5 mmol/g or more.

2. The metal corrosion protection treatment method for the water system according to Claim 1, wherein the sulfonic acid monomer in the component (A) is a monoethylenically unsaturated sulfonic acid monomer.

3. The metal corrosion protection treatment method for the water system according to Claim 1 or 2, wherein a weight average molecular weight of the copolymer as the component (A) is 1,000 to 1,000,000.

4. The metal corrosion protection treatment method for the water system according to any one of Claims 1 to 3, wherein a molar ratio of the (meth)acrylic acid monomer to the sulfonic acid monomer in the component (A) is 97:3 to 30:70.

5. The metal corrosion protection treatment method for the water system according to any one of Claims 1 to 4, wherein a weight average molecular weight of the maleic acid-based polymer as the component (B) is 500 to 5,000.

6. The metal corrosion protection treatment method for the water system according to any one of Claims 1 to 5, wherein the maleic acid-based polymer as the component (B) is a copolymer of a maleic acid monomer and an isobutylene monomer, and/or a polymaleic acid.

7. The metal corrosion protection treatment method for the water system according to any one of Claims 1 to 6, wherein an anticorrosive agent is allowed to be present in the water system.

8. The metal corrosion protection treatment method for the water system according to any one of Claims 1 to 7, wherein a calcium hardness of the water system is 300 mg/L or less as CaCO₃.

9. The metal corrosion protection treatment method for the water system according to any one of Claims 1 to 8, wherein the metal corrosion protection treatment method uses (i) a metal corrosion protection treatment agent or (ii) a metal corrosion protection treatment agent kit as recited below;
(i) the metal corrosion protection treatment agent which contains the component (A) as a copolymer of a (meth)acrylic acid monomer and a sulfonic acid monomer and the component (B) as a maleic acid-based polymer in which a carboxyl group content in the maleic acid-based polymer is 11.5 mmol/g or more, where a content ratio of the component (A) to the component (B) by mass is 1:9 to 7:3, or
(ii) the metal corrosion protection treatment agent kit which contains a first agent for metal corrosion protection containing the component (A) as a copolymer of a (meth)acrylic acid monomer and a sulfonic acid monomer and contains a second agent for metal corrosion protection containing the component (B) as a maleic acid-based polymer in which a carboxyl group content in the maleic acid-based polymer is 11.5 mmol/g or more.

10. (i) A metal corrosion protection treatment agent or (ii) a metal corrosion protection treatment agent kit as recited below:
(i) the metal corrosion protection treatment agent which contains a component (A) as a copolymer of a (meth)acrylic acid monomer and a sulfonic acid monomer and a component (B) as a maleic acid-based polymer in which a carboxyl group content in the maleic acid-based polymer is 11.5 mmol/g or more, where a content ratio of the component (A) to the component (B) by mass is 1:9 to 7:3, or
(ii) the metal corrosion protection treatment agent kit which contains a first agent for metal corrosion protection containing the component (A) as a copolymer of a (meth)acrylic acid monomer and a sulfonic acid monomer and contains a second agent for metal corrosion protection containing the component (B) as a maleic acid-based polymer in which a carboxyl group content in the maleic acid-based polymer is 11.5 mmol/g or more.
